# EUROPÄISCHE PATENTSCHRIFT

(11) **EP 0 700 591 B1**
(45) Veröffentlichungstag und Bekanntmachung des Hinweises auf die Patenterteilung: **12.05.1999**
(21) Anmeldenummer: 95901326.9
(22) Anmeldetag: 24.11.1994
(51) Int. Cl.: H02K 9/26

(54) **ELEKTROMOTOR**
ELECTRIC MOTOR
MOTEUR ELECTRIQUE

(30) Priorität: 02.12.1993 DE 4341105
(43) Veröffentlichungstag der Anmeldung: 13.03.1996
(73) Patentinhaber: VORWERK & CO. INTERHOLDING GmbH, 42275 Wuppertal (DE)
(72) Erfinder: PSZOLA, Peter, D-53123 Bonn (DE)
(74) Vertreter: Müller, Enno, Dipl.-Ing.
(86) Internationale Anmeldenummer: DE9401391
(87) Internationale Veröffentlichungsnummer: WO9515606

(56) Entgegenhaltungen:
- EP-A- 0 392 418
- DE-A- 2 524 428
- DE-B- 1 021 470
- DE-B- 1 075 730

## Beschreibung

Die Erfindung betrifft einen Elektromotor mit den Merkmalen des Oberbegriffes des Anspruches 1.

Derartige Elektromotoren sind in vielfältigem Einsatz, bspw. auch in Haushaltsgeräten, wie Küchenmaschinen, Staubsaugern und dgl. Ein gewisses Problem bereitet immer der Abrieb von Kohlenstaub, der durch die Relativbewegung zwischen den Bürsten und dem Kommutator des Elektromotors auftritt. Sich niederschlagender Kohlenstaub kann die Hochspannungsfestigkeit eines solchen Elektromotors stark herabsetzen. Weiter müssen bei bekannten Elektromotoren besondere und in der Regel aufwendige Maßnahmen getroffen werden, um die negativen Folgen solcher Ablagerungen auszugleichen. In diesem Zusammenhang ist es bereits vorgeschlagen worden (vgl. DE-OS 31 07 879), radial zu dem Strömungsweg der Luft, nachgeschaltet zu dem Elektromotor, elektrostatisch aufladbares Fasermaterial als Filter anzuordnen. Wenn auch diese Maßnahme mit einer gewissen Effektivität verbunden ist, so ist auch festzustellen, daß sie baulich vergleichsweise aufwendig ist. Weiter ist in diesem Zusammenhang auch auf einen Stand der Technik gemäß DE-OS 33 41 230 zu verweisen. Hiernach ist vorgeschlagen, im Kommutatorraum einen Luftführungszylinder anzuordnen, der zusammen mit dem Kommutator einen konzentrischen Luftspalt von wenigstens einigen Millimeter Stärke bildet. Dies um die Kohlenstaubpartikel durch die dadurch erzwungene hohe Strömungsgeschwindigkeit der Luft aus dem Kommutatorraum zu befördern. Weitere Maßnahmen zur Abscheidung der Kohlenstaubpartikel aus dem Luftstrom sind hier aber nicht vorgeschlagen. Für einen gekapselten Motorraum schlägt die DE-AS 1 021 470 vor, hinter dem Kollektor mittels eines Ventilators die vom Kollektor kommende, staubhaltige Luft anzusaugen und über Leitbleche einem Flüssigkeitsspiegel zuzuführen. In der Flüssigkeit soll dann der Kohlenstaub gebunden werden. Zum Stand der Technik ist auch auf die FR-PS 1 541 898 hinzuweisen. Aus dieser Druckschrift ist es bekannt, zugeordnet zu einem Radiallüfter, jedoch vorgeschaltet zu einem Elektromotor, feststehende Aufnahmetaschen im Strömungsweg der Luft vorzusehen, in welchen durch eine Strömungsumlenkung eine Niederschlagung und Festhaltung von Partikeln, welche im Luftstrom befördert sind, erfolgen soll.

Darüber hinaus ist aus der DE 25 24 428 A1 ein elektrischer Pumpenantrieb bekannt, bei welchem der Elektromotor von Flüssigkeit durchsetzt wird. Vorgeschaltet zu den bewegten Teilen des Elektromotor ist ein Laufrad angeordnet, welches radiale Austrittswege für die Flüssigkeit aufweist. Weiter besitzt das Laufrad Taschen, in welchen Verunreinigungen der Flüssigkeit aufgefangen werden sollen. Kohlebürsten, die mit einem Kommutator zusammenwirken, sind bei diesem bekannten Elektromotor nicht vorgesehen.

Der Erfindung stellt sich die Aufgabe, ein Elektromotor wie eingangs vorausgesetzt anzugeben, bei welchem auf effektive, jedoch baulich möglichst einfache Weise eine Ausfilterung von Feinstpartikeln, insbesondere Kohlenstaubpartikeln aus der Luft möglich ist.

Diese Aufgabe ist beim Gegenstand des Anspruches 1 gelöst, wobei darauf abgestellt ist, daß eine Aufnahmetaschenwandung mit dem Strömungsteil in im wesentlichen gleicher Geschwindigkeit bewegbar ist. Erfindungsgemäß ist erkannt worden, daß bei Aufnahmetaschen, die Feststehend sind, und aus welchen aus einem bewegten Radiallüfter Luft hineinbefördert wird, aufgrund der sich ergebenden großen Turbulenzen und Geschwindigkeitsdifferenzen zwar eine Abscheidung von Partikeln aus dem Luftstrom möglich ist, jedoch immer wieder auch eine Aufwirbelung von solchen Partikeln in den Aufnahmetaschen erfolgt, jedenfalls dann, wenn es sich um Kleinstteile handelt, wie dies bei Kohlenstaubpartikeln, die auf den Bürstenabrieb im Elektromotor zurückgehen, der Fall ist. Ausgehend von dieser Erkenntnis schlägt die Erfindung vor, daß die Abscheidung in einem mit dem Luftstrom jedenfalls bezüglich der Winkelgeschwindigkeit mit bewegten Luftraum erfolgt, der jedoch aufgrund der taschenartigen Ausbildung des diesbezüglichen Raumes eine Art Totraum bezüglich des eigentlichen Luftstromes darstellt, indem also die Strömungsgeschwindigkeit sich stark, praktisch bis auf Null, verringert, so daß im Zuge der Strömungsumlenkung aufgrund von Zentrifugal- und gegebenenfalls Coriolis-Kräften in diese Aufnahmetasche hineinbewegte Partikel dort zur Ruhe kommen und sich ablagern. Überraschend wurde festgestellt, daß die Partikel bei dieser Ausgestaltung auch aus den Aufnahmetaschen praktisch nicht, oder jedenfalls nicht in einem erheblichen Maße, wieder hinausgetragen werden. Selbst An- und Abfahrvorgänge des Elektromotors wirken sich insoweit nicht negativ aus. Bei geeigneter größenmäßiger Ausgestaltung einer solchen Aufnahmetasche ist auch genügend Aufnahmeraum ausbildbar, um über die Lebensdauer eines Elektromotors auszufilternde Partikel darin aufzunehmen. Die Partikel werden ständig aufgrund der bevorzugt rotatorischen Bewegung des Strömungselementes durch die Zentrifugalkräfte an die Wandung der Aufnahmetasche gedrückt. Der erfindungsgemäße Gedanke hat auch losgelöst von einem Elektromotor Bedeutung hinsichtlich der Filterung von Feinstelementen insbesondere Feinststäuben aus einem Luftstrom. Natürlich hat der Gedanke auch Bedeutung im Hinblick auf größere auszufilternde Teile aus einem Luftstrom oder einem Fluidstrom allgemein. In Ausgestaltung der Erfindung ist vorgesehen, daß die Aufnahmetasche innerhalb des Strömungsteils ausgebildet ist. Grundsätzlich ist es bspw. denkbar, daß die Aufnahmetasche zwar in den Luftstrom des Strömungsteils integriert ist, jedoch gesondert ausgebildet ist und bspw. zu einer - wenn gewünscht - Entleerung der Aufnahmetaschen abbremsbar und gesondert ausbaubar oder auswechselbar ist. Bevorzugt ist aber die bauliche Integration in das Strömungsteil. In weiterer Einzelheit bietet sich in diesem Zusammenhang an, die Aufnahmetasche in den Radiallüfter integriert auszubilden. Dies ist baulich besonders vorteilhaft, da praktisch kein zusätzlicher Raumbedarf hierfür konstruktiv gegeben ist. Vielmehr ist lediglich die Gestaltung des Radiallüfters entsprechend anzupassen. Hinsichtlich der Strömungsumlenkung schlägt die Erfindung auch vor, daß diese mindestens 45° beträgt. Bei realisierten Ausführungsformen wurde mit ca. 180° gearbeitet und entsprechend gute Ergebnisse konnten festgestellt werden. Die Tasche ist konstruktiv bspw. derart ausgebildet, daß in einem Radialquerschnitt eine im wesentlichen halbkreisförmige Innenwandung ausgebildet ist.

Nachstehend ist die Erfindung des weiteren anhand der beigefügten Zeichnung, die jedoch lediglich Ausführungsbeispiele darstellt, erläutert. Hierbei zeigt:
- Fig. 1: einen Querschnitt durch einen Elektromotor eines Staubsaugers, mit nachgeschaltetem gesondertem Abscheider;
- Fig. 2: einen Querschnitt gemäß Fig. 1, wobei der Abscheider in einen Radiallüfter integriert ist;
- Fig. 3 bis 5: weitere möglichen Ausgestaltungen des Radiallüfters.

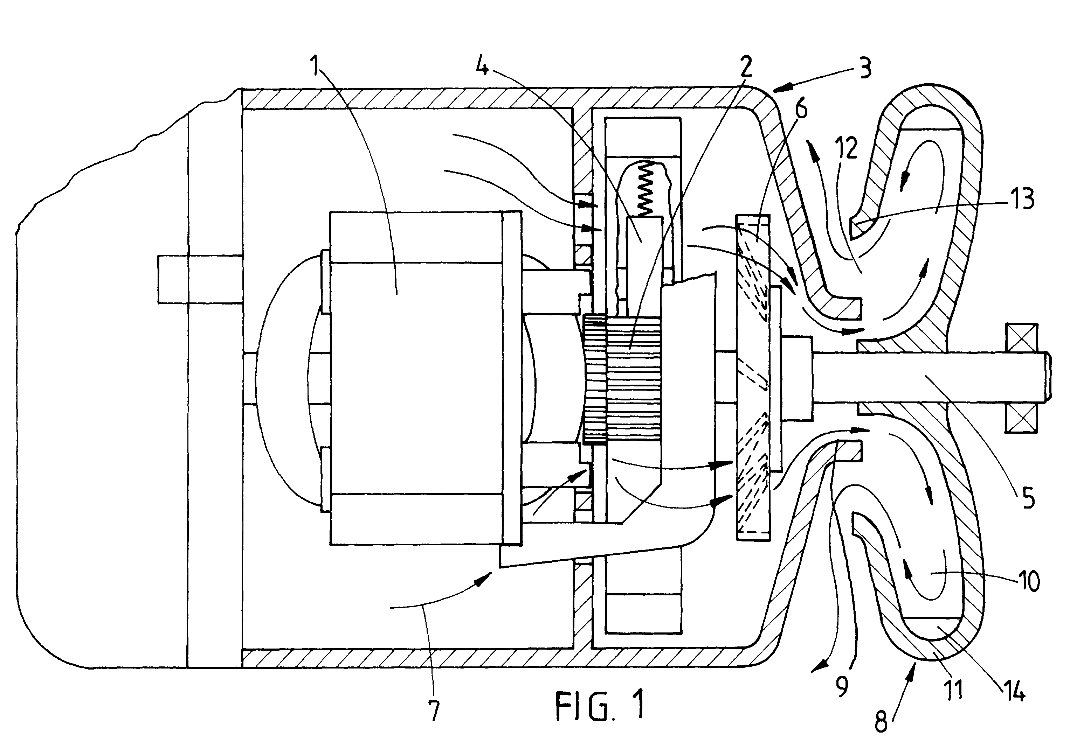

Mit Bezug zu Fig. 1 ist ein Stator 1 und ein Kommutator 2 eines Elektromotors 3 zu erkennen. Der Kommutator 2 wirkt mit Kohlebürsten 4 zusammen, in welchen Kohlenstoffstifte angeordnet sind. Nachgeschaltet zu dem Kommutator 2, jedoch auf der Welle 5 des Elektromotors 3 sitzend ist ein Ventilator 6 angeordnet. Der Ventilator 6 saugt Luft über den Stator. Der Strömungsweg der Luft ist durch Pfeile 7 angedeutet. Weiter nachgeschaltet zu dem Ventilator 6, jedoch gleichfalls auf der Welle 5 des Elektromotors 3 sitzend, ist ein Strömungsteil in Form eines Abscheiders 8 ausgebildet. Die Luft strömt über eine Verjüngungsdüse 9 radial innen in den Abscheider 8 und wird dort zunächst um ca. 90° nach radial außen umgelenkt. Danach erfolgt eine weitere Umlenkung um ca. 180° innerhalb des Abscheiders 8. Diese Umlenkung um ca. 180° ist durch eine Tasche 10 bedingt, welche der Abscheider 8 ausbildet. Die Tasche 10 ist durch eine integrale Wandung 11 gebildet, die sodann über etwa die Hälfte der radialen Erstreckung des Abscheiders 8 wieder auf die Welle 5 zu ausgebildet ist. Die Luft entströmt schließlich dem Abscheider 8 durch einen Spalt 12 zwischen einer Außenfläche der Düse 9 und einem radial inneren Endbereich 13 der Wandung 11.

Es ist durch die gestrichelte Darstellung des Luftführungspfeiles im Bereich der Tasche 10 angedeutet, daß dort radial außen eine Luftberuhigung gegeben ist und daß sich in der Tasche 10 hierbei die in dem Luftstrom mitgeführten Kleinstpartikeln, insbesondere Kohlenstaubpartikel, ablagern. Die Ablagerung der Kohlenstaubpartikel ist bei 14 angedeutet. Charakteristisch ist, daß die Kohlenstoffpartikel in der Tasche 10 eine umlaufgleichmäßige Schicht im radial äußersten Bereich des Inneren des Abscheiders 8 bilden.

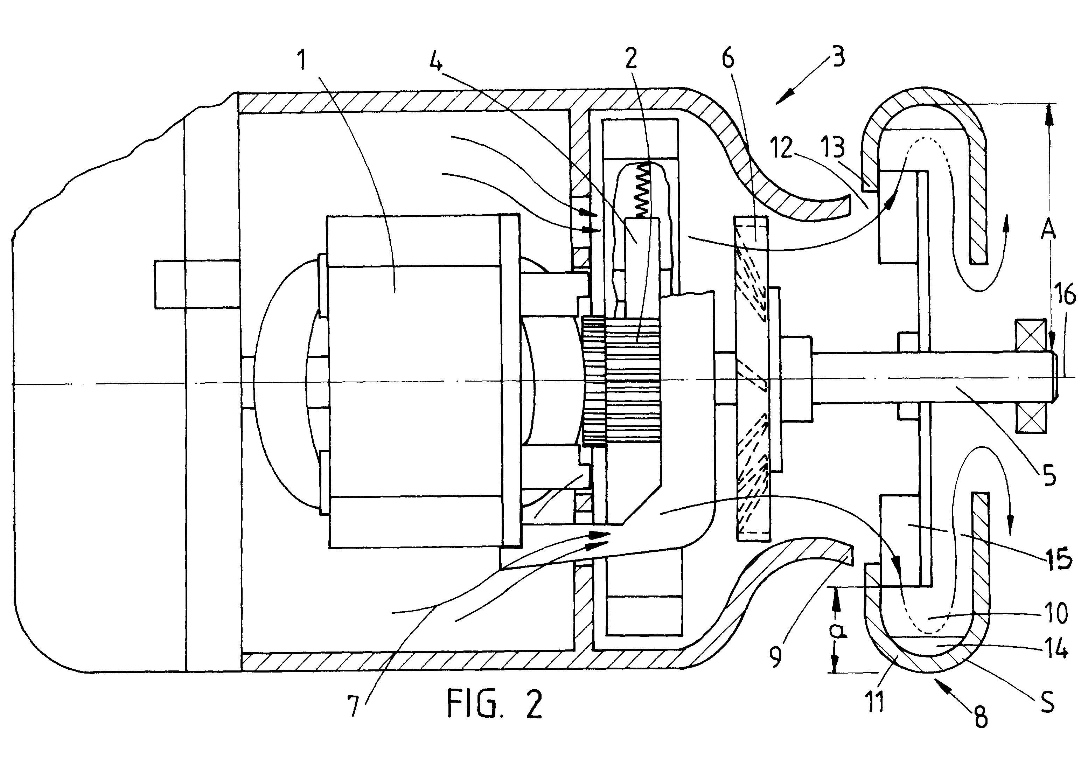

Bei der Darstellung gemäß Fig. 2 ist ein Radiallüfter bzw. Ventilator integriert mit dem Abscheider 8 ausgebildet. Im wesentlichen sind ansonsten gleiche Verhältnisse wie beim Gegenstand der Fig. 1 gegeben. Die Leitelemente 15 des Radiallüfters enden jedoch in einem gewissen Abstand a vor einem Scheitelpunkt S der Tasche 10, deren Wandung, wie auch in Fig. 1, im Querschnitt ersichtlich im wesentlichen halbkreisförmig ausgebildet ist. Der Abstand a beträgt etwa ein Drittel des Gesamtabstandes A von einer Wellenachse 16 bis zu dem Scheitelpunkt S in der Tasche 10 des Abscheiders 8.

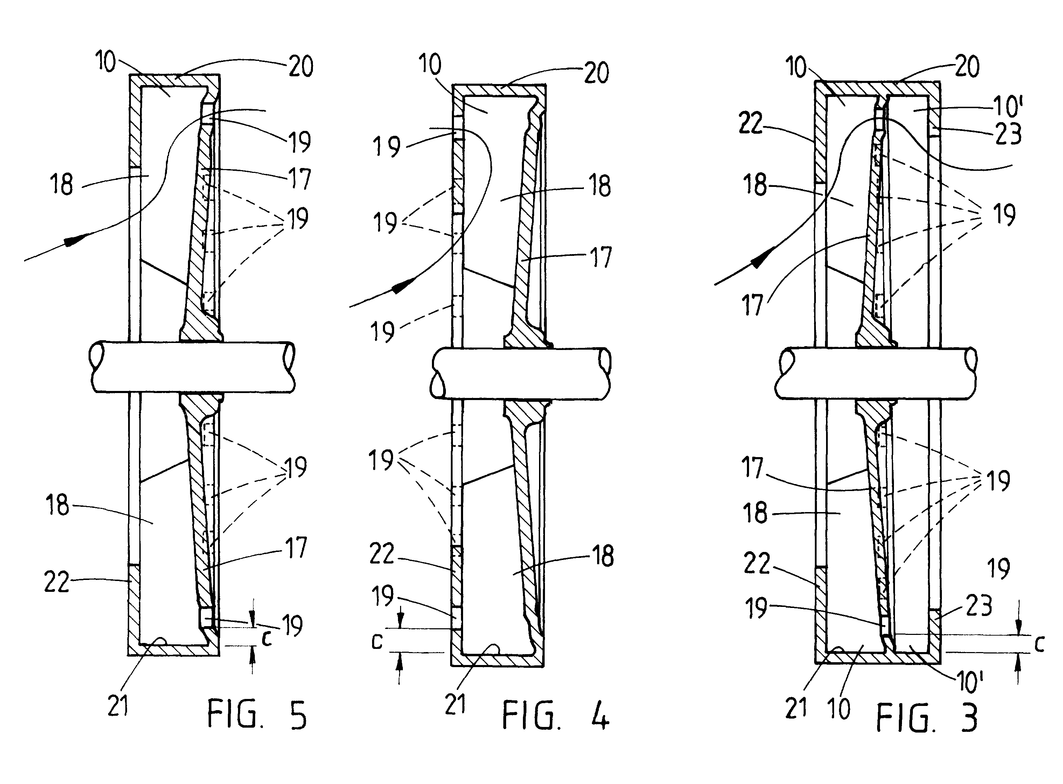

In den Fig. 3 bis 5 sind weitere Varianten eines Radiallüfters mit integriertem Abscheider für Kleinstpartikel wie Kohlenstaubpartikel dargestellt, wobei der Elektromotor, an welchem derartige Abscheider bevorzugt angeordnet sind, nicht jeweils mit dargestellt ist.

Bei der Ausführung gemäß Fig. 3 ist gleichsam eine Doppeltasche 10 und 10' verwirklicht. Der Luftströmungsweg ist wiederum durch Pfeile gekennzeichnet.

In einer Mittelwand 17 des Radiallüfters, an welchem vorderseitig auch die Lüftungsleitelemente 18 angeformt sind, ist eine Durchströmöffnung 19 ausgebildet. Diese Durchströmöffnung 19 ist nahe der radial äußeren Wandung 20 des Radiallüfters ausgebildet, jedoch mit einem Abstand c zur Innenwand 21 dieser Ausführungsform des Radiallüfters, welche Innenwand 21 im wesentlichen zylinderförmig verläuft. Weiter setzt sich die Wandung 20 vorderseitig des Radiallüfters in eine etwa rechtwinklig verlaufende Wandung 22 fort, welche sich von radial außen nach radial innen erstreckt. Insgesamt ist so im radial äußeren Bereich der Elemente 18 wiederum eine Taschenausformung gegeben, in welcher sich die Partikel niederschlagen können. Aufgrund der Strömungsgeschwindigkeitserhöhung bei Durchsetzung der Löcher bzw. Bohrungen 19 und der nachgeschalteten weiteren Taschenausbildung in Zusammenwirkung wiederum mit der Wandung 20 und einer gleichfalls sich von radial außen nach radial innen erstreckenden Wandung 23 ist nachgeschaltet zu den Durchgangsbohrungen 19 eine weitere Taschenausbildung geschaffen.

Bei der Ausführungsform gemäß Fig. 4 ist die Mittelwandung 17 des Radiallüfters geschlossen ausgebildet und es findet eine Strömungsumlenkung gleichsam nur in dem vorderen Teil des Radiallüfters statt, wie er in Fig. 3 dargestellt ist. Die Wandungen 20 und 22 sind etwa in gleicher Weise vorgesehen, jedoch ist hier die Durchströmöffnung in der Wandung 22 ausgebildet. Die Durchströmöffnung 19 ist wiederum in einem Abstand c von der Innenwandung 21 vorgesehen. Die Taschenausformung wird entsprechend durch den Wandabschnitt der Wandung 22 bis etwa zu dem Abstand c, die Innenwandung 21 und einen entsprechenden Abschnitt der Wandung 17 gebildet. Die Strömung wird hier insgesamt um ca. 180° umgelenkt, im Bereich der Tasche um 90° (wohingegen bei der Ausführungsform nach Fig. 3 eine zweimalige Umlenkung um ca. 90° erfolgt, einmal vor der Durchgangsöffnung 19 und einmal hinter der Durchgangsöffnung 19).

Die Ausführungsform gemäß Fig. 5 schließlich entspricht der Ausführungsform gemäß Fig. 3, wobei jedoch nach der Durchströmöffnung 19 die Wandung 20 nicht mehr ausgebildet ist und entsprechend auch nicht die Wandung 23. Die Wandungen 20, 17 und 22 bzw. 23 entsprechen - soweit sie zur Ausbildung der Aufnahmetasche beitragen - der vorstehend erwähnten Aufnahmetaschenwandung 11.

## Patentansprüche

1. Elektromotor (3), insbesondere Universalmotor, mit einem Kommutator (2) und mit dem Kommutator (2) zusammenwirkenden Kohlebürsten (4), welcher Elektromotor (3) mit einem Luftstrom insbesondere zur Kühlung beaufschlagt ist, wobei in einem Strömungsweg der Luft ein rotierendes Strömungsteil angeordnet ist, welches von dem Luftstrom zumindest teilweise zu durchsetzen ist, mit einer Strömungsumlenkung innerhalb des Strömungsteils, wobei weiter zugeordnet zu der Strömungsumlenkung eine Aufnahmetasche (10) ausgebildet ist und das Strömungsteil in dem Strömungsweg der Luft nachgeschaltet zu den bewegten Teilen des Elektromotors (3) angeordnet ist, dadurch gekennzeichnet, daß eine Aufnahmetaschenwandung (11) mit dem Strömungsteil in im wesentlichen gleicher Geschwindigkeit bewegbar ist.

2. Elektromotor nach Anspruch 1, dadurch gekennzeichnet, daß die Aufnahmetasche (10) innerhalb des Strömungsteils ausgebildet ist.

3. Elektromotor nach Anspruch 1 oder 2, dadurch gekennzeichnet, daß ein Radiallüfter (6) vorgesehen ist und daß die Aufnahmetasche (10) in dem Radiallüfter (6) integriert ausgebildet ist.

4. Elektromotor nach einem der Ansprüche 1 bis 3, dadurch gekennzeichnet, daß die Strömungsumlenkung mindestens 45° beträgt.

5. Elektromotor nach einem der Ansprüche 1 bis 4, dadurch gekennzeichnet, daß die Strömungsumlenkung im Bereich der Aufnahmetasche (10) ca. 180° beträgt.

6. Elektromotor nach einem der Ansprüche 1 bis 5, dadurch gekennzeichnet, daß die Aufnahmetasche (10) in einem Radialquerschnitt eine im wesentlichen halbkreisförmige Innenwandung aufweist.

7. Elektromotor nach einem der Ansprüche 1 bis 6, dadurch gekennzeichnet, daß zwei Aufnahmetaschen (10, 10') ausgebildet sind, welche durch eine Wandung (17) mit einer Durchströmöffnung (19) gesondert sind.

## Claims

1. Electric motor (3), in particular a uiniversal motor, having a commutator (2) and carbon brushes (4) cooperating with the commutator (2), to which electric motor (3) there is applied an air stream, in particular for cooling, a rotary flow component being provided in a flow path for the air, the air stream to pass at least in part through the rotary flow component, with a flow deflection within the flow component, a receiving pocket (10) associated with the flow deflection being further provided and the flow component being disposed in the flow path of the air downstream of the moving parts of the electric motor (3), characterised in that a wall (11) of the receiving pocket is movable with the flow component at substantially the same speed.

2. Electric motor according to Claim 1, characterised in that the receiving pocket (10) is provided within the flow component.

3. Electric motor according to Claim 1 or 2, characterised in that a radial fan (6) is provided and that the receiving pocket (10) is integrally formed in the radial fan (6).

4. Electric motor according to one of Claims 1 to 3, characterised in that the flow deflection is at least 45°.

5. Electric motor according to one of Claims 1 to 4, characterised in that the flow deflection in the region of the receiving pocket (10) is approximately 180°.

6. Electric motor according to one of Claims 1 to 5, characterised in that the receiving pocket (10) has a substantially semicircularly shaped inner wall in a radial cross-section.

7. Electric motor according to one of Claims 1 to 6, characterised in that two receiving pockets (10, 10') are provided, which are separated by a wall (17) having a through flow opening (19).

## Revendications

1. Moteur électrique (3), en particulier moteur universel, avec un commutateur (2) et avec des balais à charbon (4) coopérant avec le commutateur (2), le moteur électrique (3) étant alimenté avec un flux d'air, en particulier pour assurer le refroidissement, où dans un parcours d'écoulement de l'air est disposée une partie d'écoulement tournante qui est au moins partiellement traversée par le flux d'air, avec une déviation d'écoulement à l'intérieur de la partie d'écoulement, où en outre est réalisée associée à la déviation d'écoulement une poche de réception (10), et la partie d'écoulement, dans le chemin d'écoulement de l'air étant mise en circuit en aval des parties mobiles du moteur électrique (3), caractérisé en ce qu'une paroi de poche de réception (11) est déplaçable avec la partie d'écoulement à une vitesse sensiblement identique à celle de la partie d'écoulement.

2. Moteur électrique selon la revendication 1, caractérisé en ce que la poche de réception (10) est constituée à l'intérieur de la partie d'écoulement.

3. Moteur électrique selon la revendication 1 ou 2, caractérisé en ce qu'un ventilateur radial (6) est prévu et que la poche de réception (10) est réalisée de façon intégrée dans le ventilateur radial (6).

4. Moteur électrique selon l'une des revendications 1 à 3, caractérisé en ce que la déviation d'écoulement est d'au moins 45°.

5. Moteur électrique selon l'une des revendications 1 à 4, caractérisé en ce que la deviation d'écoulement dans la zone de la poche de réception (10) est d'environ 180°.

6. Moteur électrique selon l'une des revendications 1 à 5, caractérisé en ce que la poche de réception (10) présente, si l'on observe en coupe radiale, une paroi intérieure en forme sensiblement en demi-cercle.

7. Moteur électrique selon l'une des revendications 1 à 6, caractérisé en ce que deux poches de réception (10, 10') sont constituées, séparées par une paroi (17) dotée d'une ouverture de passage d'écoulement (19).
